# EUROPÄISCHE PATENTSCHRIFT

(11) **EP 1 410 323 B1**
(45) Veröffentlichungstag und Bekanntmachung des Hinweises auf die Patenterteilung: **12.09.2012**
(21) Anmeldenummer: 01956277.6
(22) Anmeldetag: 26.06.2001
(51) Int. Cl.: G06K 19/08, G06K 19/16

(54) **PERSONALISIERTES SICHERHEITSERZEUGNIS**
PERSONALISED SECURITY PRODUCT
PRODUIT DE SECURITE PERSONNALISE

(30) Priorität: 21.09.2000 DE 10047460
(43) Veröffentlichungstag der Anmeldung: 21.04.2004
(73) Patentinhaber: U-NICA Technology AG, 7208 Malans (CH)
(72) Erfinder: FISCHER, Dirk, 33106 Paderborn (DE); FANNASCH, Lothar, 33647 Bielefeld (DE); KAPPE, Frank, 33378 Rheda-Wiedenbrück (DE); HENNEMEYER-SCHWENKER, Michael, 33165 Lichtenau-Herbram (DE); BORMANN, Frank, 33818 Leopoldshöhe (DE); SCHUMACHER, Matthias, 33178 Borchen (DE)
(74) Vertreter: Bremi, Tobias Hans
(86) Internationale Anmeldenummer: PCT/DE2001/002302
(87) Internationale Veröffentlichungsnummer: WO 2002/027652

(56) Entgegenhaltungen:
- WO-A-97/21552
- DE-A- 19 629 075
- US-A- 5 010 243

## Beschreibung

Die vorliegende Erfindung betrifft ein Verfahren zur Herstellung eines gegen Fälschungen gesicherten Erzeugnisses, d. h. eines Sicherheitserzeugnisses, ein Sicherheitselement, und ein Sicherheitserzeugnis nach dem betreffenden unabhängigen Patentanspruch, mit den Merkmalen des Oberbegriffs.

Verschiedene Sicherheitsdruckerzeugnisse, wie z.B. Kreditkarten, Personaldokumente, Produktschutzetiketten, Banknoten etc., sind heute in großer Zahl mit Sicherheitsetiketten ausgerüstet. Als Varianten kommen dabei als holographische Sicherheitslabel sowohl metallisierte und nichtmetallisierte Prägehologramme oder auch Volumenhologramme zum Einsatz. Holographische Sicherheitslabel haben nach dem Stand der Technik jedoch den Nachteil, dass sie in der Regel nicht individuell personalisierbar sind.

Aus Gründen des besseren Fälschungsschutzes ist es aber zu bevorzugen, Sicherheitsmerkmale zu verwenden, die personalisierbar sind, das heißt die individuell für jedes Sicherheitsdokument gefertigt werden. Unter solchen personalisierbaren, individuellen Sicherheitsmerkmalen versteht man z.B die Seriennummer oder im Falle von personengebundenen Sicherheitsdokumenten den Namen, die Unterschrift oder ein Portrait.

Aus dem Stand der Technik ist es bekannt, dass personalisierte Sicherheitslabel verwendet werden. So ist aus der Offenlegungsschrift EP 0 896 260 A2 bekannt, dass Volumenhologramme personalisiert und anschließend mit einer fertig personalisierten ID-Karte zu einer Einheit zusammengefügt werden. Dieses Verfahren hat aber den entscheidenden Nachteil, dass die Produktion der Individual-Hologramme und der personalisierten Sicherheitsdokumente unabhängig voneinander erfolgt. Das Zusammenfügen zu einem kompletten personalisierten Sicherheitsdokument erfolgt dann in einem weiteren Schritt des Herstellungsprozesses.

Ein Verfahren zur Herstellung eines Sicherheitselementes mit den Merkmalen des Oberbegriffs des Anspruchs 1 ist aus der WO 97/21552 bekannt, bei dem ein sogenanntes Kinegram ® eine Individualisierungsinformation unter verschiedenen Winkeln unterschiedlich aussehen lässt.

Es ist die Aufgabe der vorliegenden Erfindung, ein personalisiertes Sicherheitserzeugnis bzw. ein Sicherheitselement und ein rationelles Verfahren zu dessen Herstellung zu schaffen.

Die Aufgabe wird erfindungsgemäss durch ein Verfahren zur Herstellung eines personalisierten Sicherheitselementes mit den Merkmalen des unabhängigen Patentanspruchs 1 löst.

Ein personalisiertes Sicherheitserzeugnis umfasst in der Regel einen Träger und ein Sicherheitselement. Dabei wird in einem Verfahren zur Herstellung eines personalisierten Sicherheitserzeugnisses ein nicht personalisierter Träger mit einem nicht personalisierten Sicherheitselement versehen. Das unpersonalisiert vorgefertigte Sicherheitsdokument wird dann erst in mindestens einem weiteren Schritt personalisiert. Diese Vorgehensweise zeichnet sich gegenüber dem Stand der Technik durch einen hohen Grad an Wirtschaftlichkeit bei der Herstellung der Sicherheitsdokumente aus, da hier nicht zwei getrennt hergestellte und auch getrennt personalisierte Elemente einander zugeordnet und zu einem Sicherheitsdokument zusammengesetzt werden müssen. Die Personalisierung erfolgt erfindungsgemäß erst an dem fertig aufgebauten, aber noch nicht personalisierten Sicherheitsdokument. Dadurch wird das Verfahren bei der Personalisierung erheblich vereinfacht und beschleunigt. Ferner ergibt sich auch eine größere Sicherheit vor Fälschungen oder Verfälschungen, da die Personalisierung vorzugsweise beider Elemente, also des nicht personalisierten Trägers und des nicht personalisierten Sicherheitselements, gemeinsam erfolgt. Insbesondere kann die Personalisierung auch erst unmittelbar vor der Ausgabe durchgeführt werden.

Bei der Erfindung wird das Sicherheitselement so hergestellt, dass es zumindest eine photoempfindliche Schicht umfasst Die photoempfindliche Schicht weist durch optische Strahlung, wie insbesondere Laserstrahlung, in ihrer Farbe veränderliche Farbpigmente auf. Erfindungsgemäß wird ein Teil der Farbpigmente definiert in ihrer Farbe irreversibel verändert, wobei die definiert in ihrer Farbe veränderten Farbpigmente eine Personalisierungsinformation oder einen Teil einer Personalisierungsinformation bilden. Der photoempfindlichen Schicht wird hierbei ein definierter Farbeindruck verliehen. Durch eine irreversible Veränderung der Farbe der Farbpigmente durch die Laserstrahlung wird ein hoher Schutz gegen Verfälschung der Personalisierungsinformation erreicht. Indem die Farbpigmente lediglich durch Laserstrahlung eines ganz bestimmten Wellenlängenbereichs, in ihrer Farbe veränderbar sind, wird eine hohe Haltbarkeit des Sicherheitselements unter normalen Umweltbedingungen bzw. normalem Tageslicht erreicht. Dies prädestiniert ein erfindungsgemäßes Sicherheitselement z. B. zur Verwendung als Teil eines Passes oder einer Identifikationskarte bzw. ID-Karte.

Bei der Erfindung wird der Farbeindruck der photo- bzw. laserempfindlichen Schicht durch Laserstrahlung einer ersten Wellenlänge bzw. eines ersten Wellenlängenbereichs in einer ersten Weise und durch Laserstrahlung einer zweiten Wellenlänge bzw. eines zweiten Wellenlängenbereichs in einer zweiten, unterschiedlichen Weise verändert. Diese Veränderungen des jeweiligen optischen Eindrucks erfolgen insbesondere unabhängig voneinander, da die jeweiligen photoempfindlichen Bestandteile der laserempfindlichen Schicht nur in einem engen Bereich einer Wellenlänge ansprechbar sind. Hierdurch ist der Farbeindruck der photo- bzw. laserempfindlichen Schicht, der durch mindestens zwei unterschiedliche Farben geprägt ist, durch Laserstrahlung definiert zum Zwecke einer Personalisierung änderbar.

Vorteilhafterweise wird das Sicherheitselement ganz oder teilweise durch ein Hologramm, vorzugsweise ein Volumenhologramm gebildet. Insbesondere kommen als Hologramme Polymer-Volumenhologramme zum Einsatz, die sich durch besonders vorteilhafte Eigenschaften bei der Herstellung bzw. Verarbeitung, insbesondere bei Kartenanwendungen, auszeichnen. Auf besondere optische Eigenschaften, insbesondere Beugungs- und Filtereigenschaften, wird in der Beschreibung eines Ausführungsbeispiels der Erfindung näher eingegangen.

In einer wesentlichen Weiterbildung der Erfindung ist mindestens eine Schicht über dem Hologramm angeordnet, die mit mindestens einer Personalisierungsinformation versehen ist. Die Personalisierungsinformation ist vorteilhafterweise durch eine erste Teilinformation in einer ersten Farbe und durch eine zweite Teilinformation in einer zweiten Farbe gebildet. Die Personalisierungsinformation ist also in Personalisierungs-Teilinformationen aufgespalten, die auf dem Sicherheitselement räumlich getrennt voneinander angebracht werden können. Hierdurch wird die Fälschungssicherheit weiter erhöht.

Ein besonders vorteilhaftes und elegantes Verfahren für die Personalisierung des Trägers und/oder des Sicherheitselements ist die Lasergravur bzw. die Laserbeschriftung für den Träger und/oder eine farbliche Personalisierung einer durch Laserstrahlung in ihrer Farbe partiell veränderbaren Schicht des Sicherheitselements. Dabei wird die Personalisierung des Trägers und/oder des Sicherheitselements ganz oder teilweise durch die Einwirkung einer Laserstrahlung bewirkt. Auf dem Träger kann so beispielsweise eine personalisierte Beschriftung mittels Laserstrahlung erstellt werden, wobei in einem Arbeitsgang ohne Wechsel des eigentlichen Werkzeugs, vorzugsweise nur unter Veränderung der Wellenlänge und/oder Intensität der Laserstrahlung das Sicherheitselement und die laserempfindliche Schicht personalisiert wird. Die Personalisierung ist somit einfach und sehr schnell durchführbar.

Bei der Erfindung wird die Personalisierungsinformation durch Laserstrahlung zumindest einer ersten Wellenlänge bzw. eines ersten Wellenlängenbereichs und durch Laserstrahlung einer zweiten Wellenlänge bzw. eines zweiten Wellenlängenbereichs in der über dem Hologramm angeordneten Schicht gebildet. Eine solche Schicht weist Farbpigmente zumindest eines ersten Typs und eines zweiten Typs auf, wobei die unterschiedlichen Typen durch unterschiedliche Wellenlängen in ihrer Farbe unterschiedlich veränderbar sind.

Bei der Erfindung weist das Hologramm mindestens einen ersten Beugungsreflex auf, der unter einem ersten Winkel auftritt. Weiter weist das Hologramm einen zweiten Beugungsreflex unter einem zweiten Winkel auf. Das Hologramm zeigt also einen Kippeffekt, der bevorzugt visuell erkennbar und/oder maschinenlesbar ist.

Dabei ist der erste Beugungsreflex weitgehend durch Licht einer ersten Wellenlänge bzw. eines ersten Wellenlängenbereichs und der zweite Beugungsreflex weitgehend durch Licht einer zweiten Wellenlänge bzw. eines zweiten Wellenlängenbereichs gebildet. So unterscheiden sich die unter den jeweiligen Winkeln auftretenden Beugungsreflexe auch farblich voneinander.

Bei der Erfindung läßt der erste Beugungsreflex eine erste Teilinformation der Personalisierungsinformation in der ersten Farbe und der zweite Beugungsreflex eine zweite Teilinformation der Personalisierungsinformation in der zweiten Farbe aufscheinen. Dieses Aufscheinen findet dabei von seinem optischen Eindruck her für einen Betrachter vorzugsweise innerhalb des Hologramms statt.

Die über dem Hologramm angeordnete Schicht weist Farbpigmente auf, deren Farbe durch Laserstrahlung veränderbar ist. In einer bevorzugten Ausführungsform der Erfindung weist die über dem Hologramm angeordnete Schicht erste Farbpigmente auf, die überwiegend blaues Licht absorbieren, vorzugsweise Licht im Bereich von etwa 400-460 nm, und deren Eigenfarbe gelb ist.

Ergänzend weist die über dem Hologramm angeordnete Schicht vorzugsweise zweite Farbpigmente auf, die überwiegend grünes Licht absorbieren, vorzugsweise Licht im Bereich von etwa 500-560 nm, und deren Eigenfarbe rot bzw. magenta ist. Alternativ oder ergänzend weist die über dem Hologramm angeordnete Schicht in einer Ausführungsform der Erfindung dritte Farbpigmente auf, die überwiegend rotes Licht absorbieren, vorzugsweise Licht im Bereich von etwa 580-680 nm, und deren Eigenfarbe blau bzw. cyan ist. So kann die Schicht in einer Ausführungsform der Erfindung Farbpigmente von zwei oder drei der genannten Arten aufweisen, die in der Schicht gleichmäßig verteilt oder aber lokal unterschiedlich konzentriert vorgesehen sind.

In einer bevorzugten Ausführungsform der Erfindung wird die Personalisierungsinformation bzw. eine Teilinformation der Personalisierungsinformation durch Bleichung der ersten Farbpigmente und/oder der zweiten Farbpigmente und/oder der dritten Farbpigmente mittels Laserstrahlung einer geeigneten Wellenlänge erzeugt. Bevorzugt ist ein gebleichter Bereich der Farbpigmente aufweisenden Schicht, der die Personalisierungsinformation oder einen Teil einer solchen bildet, derart über dem Hologramm angeordnet, dass er von einem Beugungsreflex durchdrungen wird. Die Bereiche um diesen Bereich herum, sind vorzugsweise aufgrund der in ihrer Farbe unveränderten Farbpigmente zumindest weniger durchlässig für den Beugungsreflex und/oder für Wellenlängen, die von der Wellenlänge des Beugungsreflexes abweichen. Hierdurch ergibt sich ein vorzugsweise hoher Kontrast, wodurch die Personalisierungsinformation bzw. Teilinformation gut sichtbar wird.

Bei der Erfindung wird die Personalisierungsinformation oder eine Teilinformation der Personalisierungsinformation durch Laserstrahlung in ihrer Farbe veränderte Farbpigmente gebildet, die für Licht der Wellenlänge des ersten Beugungsreflexes oder des zweiten Beugungsreflexes transluzent bzw. durchscheinend oder lumineszent bzw. aufscheinend sind. Ferner werden die Farbpigmente derart gewählt, dass sie ohne farbverändemde Lasereinwirkung für den ersten und/oder zweiten Beugungsreflex weitgehend opak bzw. undurchsichtig sind.

Vorteilhafterweise ist das Hologramm ein Weißlicht- und/oder Tageslichthologramm und die über dem Hologramm befindliche Schicht ist für weißes Licht und/oder Tageslicht zumindest teilweise transparent. So können die optischen Effekte zur Verifikation der Echtheit ohne weitere Hilfsmittel unter üblichem sichtbaren Licht genutzt werden.

Bei einer Ausführungsform der Erfindung ist die Personalisierungsinformation oder eine erste und eine zweite Teilinformation der Persönalisierungsinformation ganz oder teilweise durch Bedrucken des Hologramms und/oder einer über dem Hologramm befindlichen Schicht gebildet. Dabei ist die durch Bedrucken erzeugte Personalisierungsinformation oder die erste Teilinformation der Personalisierungsinformation vorzugsweise für Licht der Wellenlänge bzw. des Wellenlängenbereichs des ersten Beugungsreflexes transluzent bzw. durchscheinend. Vorteilhafterweise ist die durch Bedrucken erzeugte Personalisierungsinformation oder die zweite und jede weitere Teilinformation der Personalisierungsinformation für Licht der Wellenlänge bzw. des Wellenlängenbereichs des zweiten und jedes weiteren Beugungsreflexes transluzent bzw. durchscheinend. Damit sind die vorstehend beschriebenen Verfahren einer Personalisierung durch lasergestützte Farbveränderung und durch Bedrucken miteinander vorteilhaft kombinierbar, wobei sich die erzeugbaren optischen Effekte gegenseitig betonen und/oder unterstützen. Insbesondere lassen sich durch Bedrucken optische Filter erzeugen, wie insbesondere im Bereich der Personalisierungsinformation, die lediglich für die Wellenlänge des betreffenden Beugungsreflexes weitgehend transparent sind.

Die Personalisierung, insbesondere die des Sicherheitselements, wird in einer Weiterbildung der Erfindung durch eine Schutzschicht, insbesondere gegen Abnutzung, abgedeckt. Vorteilhafterweise wird diese Schutzschicht durch die photoempfindliche Schicht gebildet, um den Herstellungsaufwand gering zu halten.

Ein nach einem erfindungsgemäßen Verfahren hergestelltes Sicherheitserzeugnis ist beispielsweise eine Kreditkarte, eine Eurocheque-Karte, eine Versichertenkarte, eine Telefonkarte, eine Führerschein-Karte, eine Ausweiskarte, eine Berechtigungskarte, ein Ausweisdokument, ein Produktschutzetikett, eine Banknote oder dgl..

Die Erfindung wird nachfolgend anhand eines Ausführungsbeispiels näher erläutert. Es zeigt:

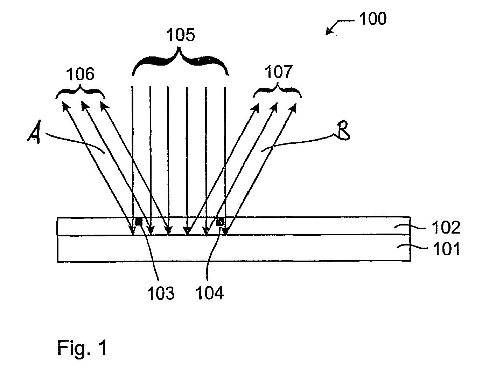

- Fig. 1: den Aufbau des erfindungsgemäßen Sicherheitselements in schematischer Darstellung.

Das im Querschnitt in Fig. 1 dargestellte erfindungsgemäße Sicherheitselement 100 besteht aus einem Polymer-Volumenhologramm 101 und einer darüber befindlichen Schicht 102. Die Schicht 102 ist mit Farbpigmenten zweier unterschiedlicher Arten versehen.

Die Farbpigmente der ersten Art sind durch Laserstrahlung einer ersten Wellenlänge bzw. eines ersten Wellenlängenbereichs und die Farbpigmente der zweiten Art durch Laserstrahlung einer zweiten Wellenlänge bzw. eines zweiten Wellenlängenbereichs, der von der ersten Wellenlänge bzw. dem ersten Wellenlängenbereichs verschieden ist, bleichbar. Unter bleichbar soll insbesondere verstanden werden, dass sich die ursprüngliche Farbe der Farbpigmente der Schicht 102 durch die Einwirkung einer entsprechenden Laserstrahlung derart verändert, das diese für visuell sichtbares Licht, wie Tageslicht oder Raumlicht, in höherem Maße als vor der Einwirkung der bleichenden Laserstrahlung transparent wird.

Zur Herstellung des in Fig. 1 im Querschnitt dargestellten Sicherheitselements wird in einem ersten Schritt ein Polymer-Volumenhologramm 101 erzeugt, das auf das Polymer-Volumenhologramm 101 auftreffende Raum- oder Tageslicht beugt, wobei visuell sichtbares Licht mit einer ersten Farbe, z. B. grün, in eine erste Raumrichtung und visuell sichtbares Licht mit einer zweiten Farbe, z. B. rot, in eine zweite Raumrichtung, die von der ersten Raumrichtung verschieden ist, von der Oberfläche des Polymer-Volumenhologramms 101 reflektiert wird. Das erfindungsgemäße Polymer-Volumenhologramm 101 weist also einen Kippeffekt auf, worauf später noch näher eingegangen werden wird.

In einer bevorzugten Ausführungsform der Erfindung stellt das Polymer-Volumenhologramm 101 ein Hoheitszeichen, ein nicht personalisiertes Logo eines Unternehmens, eine Seriennummer oder dgl. dar.

Auf ein solches Polymer-Volumenhologramm wird in einem zweiten Schritt die mit Farbpigmenten einer ersten Art und einer zweiten Art versehene Schicht 102 aufgebracht.

Das aus dem Polymer-Volumenhologramm 101 und der Schicht 102 gebildete erfindungsgemäße Sicherheitselement wird in einem dritten Schritt in eine Ausweis-, Führerschein- oder eine Berechtigungskarte, wie eine Kreditkarte, oder in ein Ausweis-, Wert- oder sonstiges Dokument oder auch in einen Wertgegenstand oder dgl. eingebracht bzw. auf einem solchen angebracht. Im Falle einer Ausweis- oder Berechtigungskarte kann das erfindungsgemäße Sicherheitselement beispielsweise in die Karte einlaminiert oder in ein Sackloch der Karte, ähnlich wie bei dem Chipmodul einer Chipkarte, eingebracht werden. Die Einbringung bzw. Anbringung des erfindungsgemäßen Sicherheitselements erfolgt vorzugsweise derart, das dieses nicht zustörungsfrei entfernt werden kann.

In einer besonders bevorzugten Ausführungsform wird das zuvor mit den zu bleichenden Farbpigmenten 102 versehene, nicht personalisierte bzw. nicht individualisierte Polymer-Volumenhologramm 101 zusammen mit den für die Kartenherstellung notwendigen transparenten und opaken Folien laminiert. Dabei bildet das Sicherheitselement eine innenliegende Schicht, die durch eine oder mehrere transparente Kunststofffolien abgedeckt ist. Die Personalisierung und/oder Individualisierung des Sicherheitselementes kann, aufgrund der transparenten Abdeckung in einem der Kartenherstellung nachfolgenden Verfahrensschritt erfolgen. Zudem schützen die transparenten Folien das Sicherheitselement vor Zerstörung und Verfälschung.

Eine derart hergestellte Ausweiskarte oder dgl. ist also nicht personalisiert und wird erst von einer autorisierten Stelle mittels einer geeigneten Vorrichtung personalisiert. Eine bevorzugte Personalisierungsvorrichtung weist einen oder mehrere Laser auf, die Laserstrahlung mit einer ersten Wellenlänge und mit einer zweiten Wellenlänge ausstrahlen. Zur Personalisierung des erfindungsgemäßen Sicherheitselements wird dieses in einem ersten Personalisierungsschritt ganz oder teilweise mit Laserstrahlung der ersten Wellenlänge bzw. eines ersten Wellenlängenbereichs bestrahlt, wodurch die ersten Farbpigmente der Schicht 102 bis auf einen Teil der ersten Farbpigmente gebleicht werden. Ein nicht gebleichtes Farbpigment bzw. Farbpixel der ersten Art ist mit dem Bezugszeichen 103 bezeichnet. Der nicht gebleichte Teil der ersten Farbpigmente behält seine ursprüngliche Farbe und bildet eine Personalisierungsinformation bzw. einen ersten Teil einer Personalisierungsinformation.

In einem zweiten Personalisierungsschritt wird das Sicherheitselement ganz oder teilweise mit Laserstrahlung der zweiten Wellenlänge bzw. eines zweiten Wellenlängenbereichs bestrahlt, wodurch die zweiten Farbpigmente der Schicht 102 bis auf einen Teil der zweiten Farbpigmente gebleicht werden. Der nicht gebleichte Teil der zweiten Farbpigmente behält ebenfalls seine ursprüngliche Farbe und bildet eine Personalisierungsinformation bzw. einen zweiten Teil der Personalisierungsinformation. Ein nicht gebleichtes Farbpigment bzw. Farbpixel der zweiten Art ist mit dem Bezugszeichen 104 bezeichnet.

Der gebündelte Strahl eines Lasers kann sehr genau und sehr schnell zur Herstellung der Personalisierungsinformation des Sicherheitselements über das Sicherheitselement geführt werden. Weiterhin ist an der Verwendung von Laserstrahlung zur Personalisierung von Vorteil, dass diese auch zur Personalisierung des Kartenkörpers durch Laserbeschriftung bzw. Lasergravur, beispielsweise durch Einstellung einer geeigneten Wellenlänge und/oder Strahlungsintensität für die Art des betreffenden Kartenkörpers, verwendet werden kann.

Je nach Zweck der betreffenden Karte oder des Dokuments kann die individuelle Personalisierungsinformation bzw. ein Teil der individuellen Personalisierungsinformation beispielsweise ein Name, eine Kontonummer, ein Porträt oder dgl. oder eine Kombination hieraus sein.

Bei der Prüfung der Echtheit eines der obengenannten Sicherheitserzeugnisse, das mit einem erfindungsgemäßen Sicherheitselement versehen ist, nimmt die prüfende Person das Sicherheitserzeugnis, wie beispielsweise eine Ausweiskarte, in die Hand, so dass Raum- oder Tageslicht 105 auf die Oberfläche der Ausweiskarte fällt. Das Raum- oder Tageslicht 105 durchdringt die gebleichten Bereiche der Schicht 102 und gelangt auf das Polymer-Volumenhologramm 101.

Das Polymer-Volumenhologramm 101 ist erfindungsgemäß derart gestaltet, dass es das Raum- oder Tageslicht 105 beugt und Licht mit einer ersten Wellenlänge A, z. B. grünes Licht, das einen ersten Beugungsreflex 106 bildet, in eine erste Raumrichtung reflektiert. Ferner ist das Polymer-Volumenhologramm 101 erfindungsgemäß derart gestaltet, dass es Licht mit einer zweiten Wellenlänge B, z. B. rotes Licht, das einen zweiten Beugungsreflex 107 bildet, in eine zweite Raumrichtung reflektiert. Zudem ist der erste Teil der Personalisierungsinformation an einer Stelle in der Schicht 102 vorgesehen, die von dem ersten Beugungsreflex 106 und der zweite Teil der Personalisierungsinformation ist an einer Stelle in der Schicht 102 vorgesehen, die von dem zweiten Beugungsreflex 107 durchdrungen wird.

Die erste Art der Farbpigmente ist dergestalt, dass der erste Teil der Personalisierungsinformation beim Auftreffen des Lichts des ersten Beugungsreflexes 106 und einem Kippen des Sicherheitserzeugnisses in Richtung des ersten Beugungsreflexes erscheint. Dies kann dadurch erreicht werden, dass die erste Art der Farbpigmente derart gewählt ist, dass diese Farbpigmente für die Wellenlänge des ersten Beugungsreflexes 106 nicht transparent sind. Die gebleichten Bereiche der Schicht 102, aber auch die Farbe des nichtgebleichten zweiten Farbpigmentes 104, sind so gewählt, das sie für die Wellenlänge die in Richtung des Beugungsreflexes 106 reflektiert wird, transparent ist oder in dieser Farbe/Wellenlänge erscheint.

Die zweite Art der Farbpigmente 104 ist vorzugsweise derart gewählt, dass der zweite Teil der Personalisierungsinformation beim Auftreffen des Lichts des zweiten Beugungsreflexes 107 und einem Kippen des Sicherheitserzeugnisses in Richtung des zweiten Beugungsreflexes erscheint. Dies kann dadurch erreicht werden, dass die erste Art der Farbpigmente 103 derart gewählt ist, dass diese Farbpigmente für die Wellenlänge des zweiten Beugungsreflexes 107 nicht transparent sind. Die gebleichten Bereiche der Schicht 102, aber auch die Farbe des nichtgebleichten ersten Farbpigmentes 103, sind so gewählt, das sie für die Wellenlänge die in Richtung des Beugungsreflexes 107 reflektiert wird, transparent ist oder in dieser Farbe/Wellenlänge erscheint.

Da während des Kippens einmal der erste Teil der Personalisierungsinformation, beispielsweise der in grüner Farbe aufscheinende Name des Karteninhabers, und einmal der zweite Teil der Personalisierungsinformation, beispielsweise das in roter Farbe aufscheinende Geburtsdatum des Karteninhabers, vor dem Hintergrund des Hologramms erscheint, lässt sich die Echtheit des erfindungsgemäßen Sicherheitselements in einfacher Weise visuell überprüfen.

Eine weitere Verbesserung der Sicherheit gegen Verfälschung kann beispielsweise erreicht werden, indem die im Sicherheitselement vorgesehene Personalisierungsinformation eine Information aufweist, die auch auf der zugeordneten Karte vorgesehen ist. So kann in einfacher, visueller Weise überprüft werden, ob die Karte und das erfindungsgemäße Sicherheitselement zusammengehören.

Es versteht sich, dass das Hologramm nicht notwendigerweise ein Polymer-Volumenhologramm sein muss, obwohl dieses eine preiswerte Möglichkeit zur Erzeugung des beschriebenen Kippeffekts bei effizienter Beugung und schmalbandiger Filterung zur Erzeugung deutlich sichtbarer Beugungsreflexe ist.

Bei einer anderen Ausführungsform der Erfindung wird anstelle eines Hologramms eine andere optisch wirksame Struktur verwendet, die, wie das erfindungsgemäße Hologramm, mindestens zwei optisch unterschiedliche Eindrücke, insbesondere Farbeindrücke, erzeugt. Diese sind vorzugsweise visuell sichtbar. Die erfindungsgemäße optisch wirksame Struktur ist dergestalt, dass mindestens einer der optischen Eindrücke nur innerhalb eines bestimmten Winkelbereichs, in bezug auf eine Senkrechte zur Oberfläche des Sicherheitselements, erscheint. Bei einer solchen optisch wirksamen Struktur kann es sich beispielsweise auch um eine entsprechend reflektierende bzw. spiegelnde Struktur bzw. Schicht handeln.

Es versteht sich, dass anstelle oder ergänzend zu einer Personalisierung des erfindungsgemäßen Sicherheitselements in gleicher Weise eine Individualisierung eines erfindungsgemäßen Sicherheitselements vorgenommen werden kann, z. B. durch eine fortlaufende Nummerierung oder dgl..

Die Erfindung ist nicht auf das erfindungsgemäße Verfahren des selektiven Bleichens zur Erzeugung der farbigen Personalisierungs- und/oder individualisierenden Information beschränkt. Vielmehr kann auch ein weiteres erfindungsgemäßes Verfahren zur farbigen Laserbeschriftung genutzt werden. In diesem Fall erfolgt die Erzeugung der farbigen Personalisierungs- und/oder individualisierenden Information durch die Verwendung von photoempfindlichen Stoffen als Farbmittel in den farblich veränderbaren Schichten. Bei diesen photoempfindlichen Stoffen handelt es sich beispielsweise um sogenannte latente Pigmente und/oder um sogenannte Colour-Former. Solche Stoffe absorbieren kein oder nur in sehr geringem Maße sichtbares Licht. Sie erscheinen daher farblos oder nur schwach farbig. Mit Hilfe von Laserstrahlung bzw. Laserlicht wird bei photoempfindlichen Schichten, die mit einem solchen Stoff versehen sind, eine chemische Reaktion hervorgerufen, bei der ein Farbmittel gebildet wird.

Wie beim erfindungsgemäßen Bleichen erfolgt also innerhalb der farblich veränderbaren Schichten eine partielle Farbveränderung durch Laserstrahlung einer geeigneten Wellenlänge. Im Gegensatz zu dem Einsatz von bleichbaren Farbmitteln, bei denen der Laserstrahl eine Erhöhung der Transparenz bewirkt, erfolgt durch die Verwendung von solchen Stoffen, wie latente Pigmente oder Colour-Former, eine Erhöhung der Farbstärke bzw. Farbintensität durch das Laserlicht. Im Idealfall erlaubt ein solcher Stoff die Erhöhung der Farbstärke bzw. Farbintensität von 0 auf einen endlichen Wert. Durch die Verwendung unterschiedlicher Stoffe, der genannten Art, in unterschiedlichen Schichten, werden in den unterschiedlichen Schichten unterschiedliche Farben erzeugt, so dass wie bei der Verwendung von bleichbaren Stoffen, wie bleichbare Pigmente, die Realisierung eines erfindungsgemäßen Sicherheitselementes mit Kippeffekt möglich ist.
Erfindungsgemäß können die transluzenten, farbigen Schichten auch durch ein Verfahren der digitalen Drucktechnik erzeugt werden, soweit sich hiermit transluzente Farbmittel auf dem Polymer-Volumenhologramm 101 aufbringen lassen. Als Druckverfahren kommen insbesondere Thermotransfer, Thermosublimation, Tintenstrahl, Farblaser, Harztransfer oder ähnliche in Frage.

### Bezugszeichenliste:

- 100: Sicherheitselement
- 101: Volumenhologramm
- 102: laserverfärbbare Schicht
- 103: Farbpigment mit einer ersten Farbe
- 104: Farbpigment mit einer zweiten Farbe
- 105: Raum- oder Tageslicht
- 106: erster Beugungsreflex
- 107: zweiter Beugungsreflex

- Wellenlänge: A
- Wellenlänge: B

## Patentansprüche

1. Verfahren zur Herstellung eines gegen Fälschungen gesicherten Erzeugnisses, das einen individualisierten Träger und ein individualisiertes Sicherheitselement (100) aufweist, wobei in einem ersten Schritt ein nicht individualisierter Träger mit einem nicht individualisierten Sicherheitselement (100) versehen wird, wobei der nicht individualisierte Träger und das nicht individualisierte Sicherheitselement (100) in einem zweiten Schritt individualisiert werden, wobei eine im Sicherheitselement (100) optisch wirksame Struktur (101) mindestens zwei unterschiedliche optische Eindrücke erzeugt, wobei mindestens einer der optischen Eindrücke (106, 107) nur innerhalb eines bestimmten Winkelbereichs, in bezug auf eine Senkrechte zur Oberfläche des Sicherheitselements, erscheint, und eine im Sicherheitselement (100) vorgesehen individualisierbare Schicht (102) und/oder eine im Sicherheitselement (100) vorgesehene individualisierte Schicht eine Individualisierungsinformation zeigt, **dadurch gekennzeichnet, dass** die individualisierbare Schicht eine photoempfindliche Schicht (102) ist, dass die Individualisierungsinformation durch eine Laserstrahlung erzeugt wird, wobei ein erster Teil der Individualisierungsinformation durch eine erste Laserstrahlung mit einem ersten Wellenlängenbereich und ein zweiter Teil der Individualisierungsinformation durch eine zweite Laserstrahlung mit einem zweiten Wellenlängenbereich erzeugt wird, wobei für die Bereitstellung des ersten Teils der Individualisierungsinformation die photoemerfindliche Schicht (102) eine erste Art von Farbpigmenten (103) umfasst, die für den ersten Wellenlängenbereich des ersten Beugungsreflexes (106) nicht transparent sind, und dass für die Bereitstellung des zweiten Teils der Individualisierungsinformation die photoempfinglich Schicht (102) eine zweite Art von Farbpigmenten (104) umfasst, die für den zweien Wellenlängenbereich des zweiten Beugungsreflexes (107) nicht transparent sind, wobei die über der optisch wirksamen Struktur angeordnete individualisierbare Schicht (102) und die Farbe der nicht gebleichten Zweiten art von Farbpigmenten (104) so gewählt sind, dass sie für den Wellenlängenbereich der Strahlung, die in Richtung des ersten Beugungsreflexes (106) reflektiert wird, transparent sind oder in dessen Farbe/Wellenlänge erscheinen, und die individualisierbare Schicht (102) und die Farbe der nicht gebleichten ersten Art von Farbpigmenten (103) so gewählt sind, dass sie für den Wellenlängenbereich der Strahlung,die in Richtung des zweiten Beugungsreflexes (107) reflektiert wird, transparent sind, oder in dessen Farbe erscheinen, wodurch der zweite Teil der Individualisierungsinformation beim Auftreffen von Licht des zweiten Beugungsreflexes (107) und einem Kippen des Sicherheitserzeugnisses in Richtung des zweiten Beugungsreflexes erscheint.

2. Verfahren nach Anspruch 1, **dadurch gekennzeichnet, dass** die photoempfindliche Schicht (102) durch die erste Laserstrahlung partiell gebleicht oder in einer ersten Weise verfärbt wird und/oder durch die zweite Laserstrahlung partiell gebleicht oder in einer zweiten Weise verfärbt wird.

3. Verfahren nach einem der Ansprüche 1 oder 2, **dadurch gekennzeichnet, dass** die optisch wirksame Struktur durch ein Hologramm (101), ein Volumenhologramm oder ein Polymer-Volumenhologramm gebildet wird.

4. Verfahren nach einem der Ansprüche 1 bis 3, **dadurch gekennzeichnet, dass** die Individualisierung (103) des Trägers und/oder der photoempfindlichen Schicht (102) ganz oder teilweise durch die Einwirkung einer Laserstrahlung auf den Träger und/oder die photoempfindliche Schicht (102) vorgenommen wird.

5. Verfahren nach einem der Ansprüche 1 bis 4, **dadurch gekennzeichnet, dass** die individualisierte Schicht durch die Verwendung einer Drucktechnik erzeugt wird.

6. Verfahren nach Anspruch 5, **dadurch gekennzeichnet, dass** die Individualisierung durch die Verwendung eines Dye-Sublimationsdruckes, Farbstoff-Sublimationsdruckes, Thermotransfer-, Laser-Druckes und/oder Tintenstrahl-Druckes erzeugt wird.

7. Verfahren nach einem der Ansprüche 5 oder 6, **dadurch gekennzeichnet, dass** die Individualisierung durch das Aufbringen einer Schutzschicht, insbesondere gegen Abnutzung, abgedeckt wird.

8. Verfahren nach Anspruch 7, **dadurch gekennzeichnet, dass** die Schutzschicht durch die photoempfindliche Schicht (102) oder die durch die Drucktechnik erzeugte Schicht gebildet wird.

9. Sicherheitselement mit einer optisch wirksamen Struktur (101), die mindestens zwei unterschiedliche Eindrücke erzeugt, wobei mindestens einer der optischen Eindrücke (106, 107) nur innerhalb eines bestimmten Winkelbereichs, in bezug auf eine Senkrechte zur Oberfläche des Sicherheitselements, erscheint, **dadurch gekennzeichnet, dass** eine über der optisch wirksamen Struktur angeordnete individualisierbare Schicht (102) vorgesehen ist, die mit mindestens zwei Individualisierungsinformationen (103, 104) versehen ist, wobei die individualisierbare Schicht eine photoempfindliche Schicht (102) ist, dass die Individualisierungsinformation einen durch Laserstrahlung erzeugten ersten Teil der Individualisierungsinformation in einem ersten Wellenlängenbereich und einen durch Laserstrahlung erzeugten zweiten Teil der Individualisierungsinformation in einem zweiten Wellenlängenbereich umfasst, wobei die optisch wirksame Struktur (101) einen ersten Beugungsreflex (106) in einer ersten Richtung und Farbe und einen zweiten Beugungsreflex (107) in einer zweiten Richtung und Farbe erzeugt, wobei der erste Teil der durch erste Laserstrahlung erzeugten Individualisierungsinformation durch Pigmente (103) gebildet wird, die für die Lichtfarbe des ersten Beugungsreflexes (106) undurchlässig und für das Licht des zweiten Beugungsreflexes (107) durchlässig sind oder in dessen Farbe erscheinen, wobei der zweite Teil der durch zweite Laserstrahlung erzeugten Individualisierungsinformation durch Pigmente (104) gebildet wird, die für die Lichtfarbe des zweiten Beugungsreflexes (107) undurchlässig und für das Licht des ersten Beugungsreflexes (106) durchlässig sind oder in dessen Farbe erscheinen.

10. Sicherheitselement gemäss Anspruch 9, **dadurch gekennzeichnet, dass** die optisch wirksame Struktur (101) durch ein Hologramm, ein Volumenhologramm oder ein Polymer-Volumenhologramm gebildet ist.

11. Sicherheitselement nach Anspruch 10, **dadurch gekennzeichnet, dass** das Hologramm (101) mindestens einen ersten Beugungsreflex (106) unter einem ersten Winkel und einen zweiten Beugungsreflex (107) unter einem zweiten Winkel, jeweils in bezug auf eine Senkrechte zur Oberfläche des Hologramms (101) zeigt.

12. Sicherheitselement nach Anspruch 11, **dadurch gekennzeichnet, dass** der erste Beugungsreflex (106) weitgehend durch Licht eines ersten Wellenlängenbereichs (A) und der zweite Beugungsreflex (107) weitgehend durch Licht eines zweiten Wellenlängenbereichs (B) gebildet ist.

13. Sicherheitselement nach Anspruch 12, **dadurch gekennzeichnet, dass** der erste Beugungsreflex (106) die erste Teilinformation (103) der Individualisierungsinformation (103, 104) in der ersten Farbe und der zweite Beugungsreflex (107) die zweite Teilinformation der Individualisierungsinformation (104) in der zweiten Farbe aufscheinen lässt.

14. Sicherheitselement nach einem der Ansprüche 9 bis 13, **dadurch gekennzeichnet, dass** die über dem Hologramm (101) angeordnete Schicht (102) Farbpigmente (103,104) aufweist, deren Farbe durch Laserstrahlung veränderbar ist.

15. Sicherheitselement nach Anspruch 14, **dadurch gekennzeichnet, dass** die über der optisch wirksamen Struktur und/oder dem Hologramm (101) angeordnete Schicht (102) erste Farbpigmente aufweist, die überwiegend blaues Licht absorbieren, vorzugsweise Licht im Bereich von etwa 400-460 nm, und deren Eigenfarbe gelb ist.

16. Sicherheitselement nach Anspruch 14 oder 15, **dadurch gekennzeichnet, dass** die über der optisch wirksamen Struktur und/oder dem Hologramm (101) angeordnete Schicht (102) zweite Farbpigmente aufweist, die überwiegend grünes Licht absorbieren, vorzugsweise Licht im Bereich von etwa 500-560 nm, und deren Eigenfarbe rot bzw. magenta ist.

17. Sicherheitselement nach einem der Ansprüche 14 bis 16, **dadurch gekennzeichnet, dass** die über der optisch wirksamen Struktur und/oder dem Hologramm (101) angeordnete Schicht (102) dritte Farbpigmente aufweist, die überwiegend rotes Licht absorbieren, vorzugsweise Licht im Bereich von etwa 580-680 nm, und deren Eigenfarbe blau bzw. cyan ist.

18. Sicherheitselement nach einem der Ansprüche 14 bis 17, **dadurch gekennzeichnet, dass** die Teilinformationen der Individualisierungsinformation durch Bleichung der ersten, zweiten bzw. dritten Farbpigmente mittels Laserstrahlung einer geeigneten Wellenlänge erzeugt sind.

19. Sicherheitselement nach einem der Ansprüche 14 bis 18, **dadurch gekennzeichnet, dass** die Teilinformationen der Individualisierungsinformation durch in ihrer Farbe veränderte Farbpigmente oder bei der Individualisierung gebildete Farbmittelgebildet sind, die für Licht der Wellenlänge des ersten Beugungsreflexes transluzent bzw. durchscheinend sind.

20. Sicherheitselement nach einem der Ansprüche 14 bis 19 **dadurch gekennzeichnet, dass** die Teilinformationen der Individualisierungsinformation durch in ihrer Farbe veränderte Farbpigmente oder bei der Individualisierung gebildete Farbmittel unter Verwendung von Laserstrahlung gebildet sind, die für Licht der Wellenlänge des zweiten Beugungsreflexes transluzent bzw. durchscheinend sind.

21. Sicherheitselement nach einem der Ansprüche 9 bis 20, **dadurch gekennzeichnet, dass** das Hologramm (101) ein Raum- und/oder Tageslichthologramm und die über dem Hologramm befindliche Schicht (102) für solches Licht weitgehend transparent ist.

22. Sicherheitselement nach Anspruch 9 oder 10, **dadurch gekennzeichnet, dass** die erste und zweite Teilinformation der Individualisierungsinformation durch Bedrucken der optisch wirksamen Struktur und/oder des Hologramms gebildet ist.

23. Sicherheitselement nach Anspruch 22, **dadurch gekennzeichnet, dass** die durch Bedrucken erzeugte erste Teilinformation der Individualisierungsinformation für Licht des Wellenlängenbereichs des ersten Beugungsreflexes transluzent bzw. durchscheinend ist.

24. Sicherheitselement nach Anspruch 22 oder 23, **dadurch gekennzeichnet, dass** die durch Bedrucken erzeugte zweite Teilinformation der Individualisierungsinformation für Licht des Wellenlängenbereichs des zweiten Beugungsreflexes transluzent bzw. durchscheinend ist.

25. Sicherheitserzeugnis mit einem Sicherheitselement nach einem der Ansprüche 9 bis 24, hergestellt nach einem Verfahren der Ansprüche 1 bis 8.

26. Sicherheitserzeugnis nach Anspruch 25, **dadurch gekennzeichnet, dass** das Sicherheitserzeugnis eine Kreditkarte, eine Eurocheque-Karte, eine Versichertenkarte, eine Telefonkarte, eine Führerschein-Karte, eine Ausweis karte, eine Berechtigungskarte, ein Ausweisdokument, ein Produktschutzetikett oder eine Banknote ist.

## Claims

1. Method for producing a product secured against counterfeiting, that comprises an individualized carrier and an individualized security element (100), whereas in a first step a non-individualized carrier is provided with a non-individualized security element (100), whereas the non-individualized carrier and the non-individualized security element (100) are individualized in a second step, whereas an optically effective structure (101) in the security element (100) creates at least two different optical impressions, whereas at least one of the optical impressions (106, 107) only appears within a defined angle range, in respect to a perpendicular to the surface of the security element, and an individualizable layer (102) provided in the security element (100) and/or an individualized layer provided in the security element (100) showing an individualization information, **characterized in that** the individualizable layer is a photo sensitive layer (102), that the individualization information is produced by a laser radiation, whereas a first part of the individualization information is produced by a first laser radiation with a first wave length range and a second part of the individualization information by a second laser radiation with a second wave length range, whereas for the provision of the first part of the individualization information the photo sensitive layer (102) comprises a first type of color pigments (103), that are not transparent for the first wave length range of the first diffraction reflex (106), and that for the provision of the second part of the individualization information photo sensitive layer (102) comprises a second type of color pigments (104), that are not transparent for the second wave length range of the second diffraction reflex (107), whereas the above of the optically effective structure arranged individualizable layer (102) and the color of the non-bleached second type of color pigments (104) are chosen as such, that they are transparent for the wave length range of the radiation that is reflected in the direction of the first diffraction reflex (106) or appear in their color/wave length, and individualizable layer (102) and the color of the non-bleached first type of color pigments (103) are chosen as such, that they are transparent for the wave length range of the radiation that is reflected in the direction of the second diffraction reflex (107), or appear in their color, whereby the second part of the individualization information appears at the impact of light from the second diffraction reflex (107) and a tilting of the security product in the direction of the second diffraction reflex.

2. Method according to claim 1, **characterized in that** the photo sensitive layer (102) is partially bleached or discolored in a first way by the first laser radiation and/or is partially bleached or discolored in a second way by the second laser radiation.

3. Method according to one of claims 1 or 2, **characterized in that** the optically effective structure is created by a hologram (101), a volume hologram or a polymer volume hologram.

4. Method according to one of claims 1 to 3, **characterized in that** the individualization (103) of the carrier and/or the photo sensitive layer (102) is carried out entirely or partially by the impact of a laser radiation on the carrier and/or the photo sensitive layer (102).

5. Method according to one of claims 1 to 4, **characterized in that** the individualized layer is created by the use of a printing technique.

6. Method according to claim 5, **characterized in that** the individualization is created by the use of dye-sublimation printing, color-sublimation printing, thermal transfer-, laser- printing and/or inkjet printing.

7. Method according one of claims 5 or 6, **characterized in that** the individualization is covered by the application of a protective layer, in particular against wear.

8. Method according to claim 7, **characterized in that** the protective layer is formed by the photo sensitive layer (102) or by the layer created by the printing technique.

9. Safety element with an optically effective structure (101), which creates at least two different impressions, whereas at least one of the optical impressions (106, 107) only appear within a defined angle range in respect to a perpendicular to the surface of the security element, **characterized in that** an individualizable layer (102) arranged above the optically effective structure is provided with at least two individualization information (103, 104), whereas the individualizable layer is a photo sensitive layer (102), that the individualization information comprises a first part of the individualization information created by laser radiation in a first wave length range and a second part of the individualization information created by laser radiation in a second wave length range, whereas the optically effective structure (101) creates a first diffraction reflex (106) in a first direction and color and a second diffraction reflex (107) in a second direction and color, whereas the first part of the individualization information created by the first laser radiation is created by pigments (103) that are opaque for the light of the first diffraction reflex (106) and that are translucent for the light of the second diffraction reflex (107) or appear in their color, whereas the second part of the individualization information created by the second laser radiation is created by pigments (104) that are opaque for the light of the second diffraction reflex (107) and are translucent for the light of the first diffraction reflex (106) or appear in their color.

10. Safety element according to claim 9, **characterized in that** the optically effective structure (101) is created by a hologram, a volume hologram or a polymer volume hologram.

11. Safety element according to claim 10, **characterized in that** the hologram (101) shows at least a first diffraction reflex (106) under a first angle and a second diffraction reflex (107) under a second angle, each in respect to a perpendicular to the surface of the hologram (101).

12. Safety element according to claim 11, **characterized in that** the first diffraction reflex (106) is created mainly through light of a first wave length range (A) and the second diffraction reflex (107) is created mainly through light of a second wave length range (B).

13. Safety element according to claim 12, **characterized in that** the first diffraction reflex (106) reveals the first partial information (103) of the individualization information (103, 104) in the first color and the second diffraction reflex (107) reveals the second partial information of the individualization information (104) in the second color.

14. Safety element according to one of claims 9 to 13, **characterized in that** the layer (102) that is arranged on top of the hologram (101) comprises color pigments (103, 104) whose color is changeable by laser radiation.

15. Safety element according to claim 14, **characterized in that** the layer (102) that is arranged on top of the optically effective structure and/or hologram (101) comprises first color pigments that absorb mainly blue light, preferably light in the range of approximately 400-460 nm, and whose inherent color is yellow.

16. Safety element according to one of claims 14 or 15, **characterized in that** the layer (102) that is arranged on top of the optically effective structure and/or hologram (101) comprises second color pigments that absorb mainly green light, preferably light in the range of approximately 500-560 nm, and whose inherent color is red, respectively magenta.

17. Safety element according to one of claims 14 to 16, **characterized in that** the layer (102) that is arranged on top of the optically effective structure and/or hologram (101) comprises third color pigments that absorb mainly red light, preferably light in the range of approximately 580-680 nm, and whose inherent color is blue, respectively cyan.

18. Safety element according to one of claims 14 to 17, **characterized in that** the partial information of the individualization information is created by bleaching of the first, the second respectively the third color pigments by laser radiation of a suitable wave length.

19. Safety element according to one of claims 14 to 18, **characterized in that** the partial information of the individualization information is created by color pigments that have been changed in their color or by colorants that where created during the individualization, that are translucent respectively transparent for the light of the wave length of the first diffraction reflex.

20. Safety element according to one of claims 14 to 19, **characterized in that** the partial information of the individualization information is created by color pigments that have been changed in their color or by colorants that where created during the individualization with the use of laser radiation, that are translucent respectively transparent for the light of the wave length of the second diffraction reflex.

21. Safety element according to one of claims 9 to 20, **characterized in that** the hologram (101) is a room and/or day light hologram and the layer (102) that is on top of the hologram is mainly translucent for such light.

22. Safety element according to one of claims 9 or 10, **characterized in that** the first and second partial information of the individualization information is created through printing of the optically effective structure and/or the hologram.

23. Safety element according to claim 22, **characterized in that** the first partial information of the individualization information that has been created by printing is translucent respectively transparent for the light of the wave length range of the first diffraction reflex.

24. Safety element according to one of claims 22 or 23, **characterized in that** the second partial information of the individualization information that has been created by printing is translucent respectively transparent for the light of the wave length range of the second diffraction reflex.

25. Safety product with a safety element according to one of claims 9 to 24, produced by a method according to claims 1 to 8.

26. Safety product according to claim 25, **characterized in that** the safety product is a credit card, a Eurocheque card, an insurance card, a phone card, a driver's license card, an authorization card, an ID card document, a product protection label or a banknote.

## Revendications

1. Procédé pour produire un produit protégé contre la contrefaçon, comprenant un support individualisé et un élément de sécurité individualisé (100), où dans une première étape un support non individualisé est pourvu avec un élément de sécurité non individualisé (100), où le support non individualisé et l'élément de sécurité non individualisé (100) sont individualisés dans une seconde étape, où une structure optique efficace (101) dans l'élément de sécurité (100) génère au moins deux impressions optiques différentes, où au moins l'une des impressions optiques (106, 107) apparait seulement à l'intérieur d'un certain domaine d'angles, par rapport à une perpendiculaire à la surface de l'élément de sécurité, et une couche individualisable (102) pourvue dans l'élément de sécurité (100) et/ou une couche individualisable pourvue dans l'élément de sécurité (100) montre une information d'individualisation, **caractérisé en ce que** la couche individualisable est une couche photosensible (102), que l'information d'individualisation est générée par un rayonnement laser, où une première partie de l'information d'individualisation est générée par un premier rayonnement laser avec un premier domaine de longueur d'onde et une deuxième partie de l'information d'individualisation est générée par un deuxième rayonnement laser avec un deuxième domaine de longueur d'onde, où pour la provision de la première partie de l'information d'individualisation la couche photosensible (102) comprend un premier type de pigments de couleur (103), qui ne sont pas transparents pour le premier domaine de longueur d'onde de la première réflexion de diffraction (106), et que pour la provision de la deuxième partie de l'information d'individualisation la couche photosensible (102) comprend un deuxième type de pigments de couleur (104), qui ne sont pas transparent pour le deuxième domaine de longueur d'onde de la deuxième réflexion de diffraction (107), où la couche individualisable (102) disposée sur la structure optique efficace et la couleur du deuxième type de pigments de couleurs (104) non blanchi sont choisies de telle sorte qu'elles sont transparentes pour le domaine de longueur d'onde du rayonnement, qui est reflété dans la direction de la première réflexion de diffraction (106), ou apparaissent dans leurs couleur/domaine de longueur d'onde, et que la couche individualisable (102) et la couleur du première type de pigments de couleurs (103) non blanchi sont choisies de telle sorte qu'elles sont transparentes pour le domaine de longueur d'onde du rayonnement, qui est reflété dans la direction de la deuxième réflexion de diffraction (107), ou apparaissent dans leurs couleur, par quoi la deuxième partie de l'information d'individualisation apparaît à l'impact de la lumière de la deuxième réflexion de diffraction (107) et un basculement du produit de sécurité en direction de la deuxième réflexion de diffraction.

2. Procédé selon la revendication 1, **caractérisée en ce que** la couche photosensible (102) est blanchie partiellement ou a changée de couleur d'une première manière par le premier rayonnement laser et/ou est blanchie partiellement ou a changée de couleur d'une deuxième manière par le deuxième rayonnement laser.

3. Procédé selon l'une quelconque des revendications 1 ou 2, **caractérisée en ce que** la structure optique efficace est créé par un hologramme (101), un hologramme de volume ou un hologramme de volume à polymère.

4. Procédé selon l'une quelconque des revendications 1 à 3, **caractérisée en ce que** l'individualisation (103) du support et/ou de la couche photosensible (102) est effectuée entièrement ou partiellement par l'influence d'un rayonnement laser sur le support et/ou la couche photosensible (102).

5. Procédé selon l'une quelconque des revendications 1 à 4, **caractérisée en ce que** la couche individualisée est créé par l'utilisation d'une technique d'impression.

6. Procédé selon la revendication 5, **caractérisée en ce que** l'individualisation est créé par l'utilisation d'une impression à sublimation thermique, impression à sublimation de couleur, impression par transfert thermique, impression à laser et/ou impression par jet d'encre.

7. Procédé selon l'une quelconque des revendications 5 ou 6, **caractérisée en ce que** l'individualisation est couverte par l'application d'une couche protectrice, en particulier contre l'usure.

8. Procédé selon la revendication 7, **caractérisée en ce que** la couche protectrice est formée par la couche photosensible (102) ou par la couche créé par la technique d'impression.

9. Elément de sécurité avec une structure optique efficace (101), qui crée au moins deux impressions optique, où au moins une des impressions optiques (106, 107) apparaît seulement à l'intérieur d'un certain domaine d'angle par rapport à une perpendiculaire à la surface de l'élément de sécurité, **caractérisée en ce qu'**il est prévu une couche individualisable (102) disposée au-dessus de la structure optique efficace, qui est pourvue avec au moins deux informations d'individualisation (102, 104), où la couche individualisable est une couche photosensible (102), que l'information d'individualisation comprend une première partie de l'information d'individualisation créé par rayonnement laser à l'intérieur d'un premier domaine de longueur d'onde et une deuxième partie de l'information d'individualisation créé par rayonnement laser à l'intérieur d'un deuxième domaine de longueur d'onde, où la structure optique efficace (101) crée une première réflexion de diffraction (106) dans une première direction et couleur et une deuxième réflexion de diffraction (107) dans une deuxième direction et couleur, où la première partie de l'information d'individualisation crée par rayonnement laser est créé par pigments (103) qui sont opaques pour la lumière de la première réflexion de diffraction (106) et sont translucides pour la lumière de la deuxième réflexion de diffraction (107) ou apparaissent dans leur couleur, où la deuxième partie de l'information d'individualisation crée par rayonnement laser est créé par pigments (104) qui sont opaques pour la lumière de la deuxième réflexion de diffraction (107) et sont translucides pour la lumière de la première réflexion de diffraction (106) ou apparaissent dans leur couleur.

10. Elément de sécurité selon la revendication 9, **caractérisée en ce que** la structure optique efficace (101) est créé par un hologramme, un hologramme de volume ou un hologramme de volume à polymère.

11. Elément de sécurité selon la revendication 10, **caractérisée en ce que** l'hologramme (101) montre au moins une première réflexion de diffraction (106) à un premier angle et une deuxième réflexion de diffraction (107) à un deuxième angle, chacun en rapport à une perpendiculaire à la surface de l'hologramme (101).

12. Elément de sécurité selon la revendication 11, **caractérisée en ce que** la première réflexion de diffraction (106) est largement créé par la lumière d'un premier domaine de longueur d'onde (A) et la deuxième réflexion de diffraction (107) est largement créé par la lumière d'un deuxième domaine de longueur d'onde (B).

13. Elément de sécurité selon la revendication 12, **caractérisée en ce que** la première réflexion de diffraction (106) révèle la première information partielle (103) de l'information d'individualisation (103, 104) dans la première couleur et la deuxième réflexion de diffraction (107) révèle la deuxième information partielle de l'information d'individualisation (104) dans la deuxième couleur.

14. Elément de sécurité selon l'une quelconque des revendications 9 à 13, **caractérisée en ce que** la couche (102) qui est disposée au-dessus de l'hologramme (101) comprend des pigments de couleur (103, 104) dont la couleur peut être changée par rayonnement laser.

15. Elément de sécurité selon la revendication 14, **caractérisée en ce que** la couche (102) qui est disposée au-dessus de la structure optique efficace et/ou de l'hologramme (101) comprend des premiers pigments de couleur qui absorbent largement la lumière bleue, de préférence la lumière dans le domaine d'environ 400-460 nm, et dont la couleur propre est le jaune.

16. Elément de sécurité selon l'une quelconque des revendications 14 ou 15, **caractérisée en ce que** la couche (102) qui est disposée au-dessus de la structure optique efficace et/ou de l'hologramme (101) comprend des deuxièmes pigments de couleur qui absorbent largement la lumière vert, de préférence la lumière dans le domaine d'environ 500-560 nm, et dont la couleur propre est le rouge, respectivement magenta.

17. Elément de sécurité selon l'une quelconque des revendications 14 à 16, **caractérisée en ce que** la couche (102) qui est disposée au-dessus de la structure optique efficace et/ou de l'hologramme (101) comprend des troisièmes pigments de couleur qui absorbent largement la lumière rouge, de préférence la lumière dans le domaine d'environ 580-680 nm, et dont la couleur propre est le bleu, respectivement cyan.

18. Elément de sécurité selon l'une quelconque des revendications 14 à 17, **caractérisée en ce que** l'information partielle de l'information d'individualisation est créé par le blanchiment des premières, des deuxièmes respectivement des troisièmes pigments de couleur par rayonnement laser d'une longueur d'onde appropriée.

19. Elément de sécurité selon l'une quelconque des revendications 14 à 18, **caractérisée en ce que** l'information partielle de l'information d'individualisation est créé par pigments de couleur qui ont été changées dans leur couleur ou par colorants qui ont été créées pendant l'individualisation, qui sont translucides respectivement transparents pour la lumière de la longueur d'onde de la première réflexion de diffraction.

20. Elément de sécurité selon l'une quelconque des revendications 14 à 19, **caractérisée en ce que** l'information partielle de l'information d'individualisation est créé par pigments de couleur qui ont été changées dans leur couleur ou par colorants qui ont été créées pendant l'individualisation, qui sont translucides respectivement transparents pour la lumière de la longueur d'onde de la deuxième réflexion de diffraction.

21. Elément de sécurité selon l'une quelconque des revendications 9 à 20, **caractérisée en ce que** l'hologramme (101) est un hologramme de lumière ambiante et/ou de lumière du jour et la couche (102) qui est disposée au-dessus de l'hologramme est largement translucide pour telle lumière.

22. Elément de sécurité selon l'une quelconque des revendications 9 ou 10, **caractérisée en ce que** la première et deuxième information partielle de l'information d'individualisation sont créés par l'impression de la structure optique efficace et/ou de l'hologramme.

23. Elément de sécurité selon la revendication 22, **caractérisée en ce que** la première information partielle de l'information d'individualisation qui a été créée par impression est translucide respectivement transparente pour la lumière d'un domaine de longueur d'onde de la première réflexion de diffraction.

24. Elément de sécurité selon une des revendications 22 ou 23, **caractérisée en ce que** la deuxième information partielle de l'information d'individualisation qui a été créée par impression est translucide respectivement transparente pour la lumière d'un domaine de longueur d'onde de la deuxième réflexion de diffraction.

25. Produit de sécurité avec un élément de sécurité selon l'une quelconque des revendications 9 à 24, produit par un procédé selon les revendications 1 à 8.

26. Produit de sécurité selon la revendication 25, **caractérisée en ce que** le produit de sécurité est une carte de crédit, une carte eurochèque, une carte d'assurance, une carte de téléphone, une carte de permis de conduire, une carte d'autorisation, un document de carte d'identité, une étiquette de protection de produit ou un billet de banque.
